(19) Europäisches Patentamt
European Patent Office
Office européen des brevets

(11) Veröffentlichungsnummer : **0 193 959**
**B1**

(12) # EUROPÄISCHE PATENTSCHRIFT

(45) Veröffentlichungstag der Patentschrift : **17.08.88**

(51) Int. Cl.⁴ : **C 08 J 5/22**

(21) Anmeldenummer : **86102994.0**

(22) Anmeldetag : **06.03.86**

(54) **Verfahren zur Herstellung bipolarer Membranen.**

(30) Priorität : **08.03.85 DE 3508206**

(43) Veröffentlichungstag der Anmeldung : **10.09.86 Patentblatt 86/37**

(45) Bekanntmachung des Hinweises auf die Patenterteilung : **17.08.88 Patentblatt 88/33**

(84) Benannte Vertragsstaaten : **BE CH DE FR GB IT LI NL**

(56) Entgegenhaltungen :
**EP-A- 0 153 713**
**GB-A- 1 038 777**

(73) Patentinhaber : **BASF Aktiengesellschaft**
**Carl-Bosch-Strasse 38**
**D-6700 Ludwigshafen (DE)**

(72) Erfinder : **Mueller, Hans, Dr.**
**Mohnstrasse 31**
**D-6700 Ludwigshafen (DE)**
Erfinder : **Puetter, Hermann, Dr.**
**Haardter Strasse 1**
**D-6730 Neustadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Diese Erfindung betrifft ein Verfahren zur Herstellung bipolarer Membranen durch Befestigung einer Anionenaustauschermembran auf einer Kationenaustauschermembran mit Hilfe eines Haftmittels aus Polyvinylamin.

Bipolare Membranen, die man z. B. für die Isolierung von Säuren oder Basen aus ihren Salzen durch Elektrodialyse verwendet, sind Ionenaustauschermembranen mit fest angeordneten Kationen auf der einen und entsprechenden Anionen auf der anderen Seite. Man stellt bipolare Membranen z. B. dadurch her, daß man auf den beiden Seiten einer neutralen Membran durch eine chemische Behandlung kationische bzw. anionische Gruppen fest verankert (US-PS-4 057 481) oder daß man eine Anionenaustauschermembran mit einer Kationenaustauschermembran in engen Kontakt bringt. z. B. durch Verpressen der übereinandergelegten Membranen in der Hitze (GB-PS-1 038 777). Man hat auch schon versucht, die Stabilität solcher bipolaren Membranen, die man durch eine Kombination von Anionenaustauschermembranen mit Kationenaustauschermembranen erhält, dadurch zu erhöhen, daß man zwischen die beiden Membranen ein ionendurchlässiges Haftmittel anbringt. Als Haftmittel wurden dabei eine polymerisierbare Mischung aus Polyethylenimin und Epichlorhydrin (US-PS-2 829 095) oder Polyvinylchlorid und Polyvinylalkohol (Israel Journal of Chemistry, Vol. 9, 1971, Seite 485) vorgeschlagen.

Die Herstellung bipolarer Membranen nach den bekannten Verfahren ist schwierig. So wird von einer chemischen Oberflächenbehandlung gefordert, daß sich die beiden Schichten, die von homogener Dicke sein müssen, über die gesamte Fläche berühren, um den Stromfluß zu gewährleisten. Andererseits dürfen sich die Schichten nicht durchdringen, weil die Membran dann ihre bipolare Selektivität verlieren würde. Bei der Kombination zweier monopolarer Membranen erhält man zwar bipolare Membranen mit definierten anionischen und kationischen Schichten, doch treten hier Schwierigkeiten an der Kontaktfläche auf. Haben die Membranen unvollständigen Kontakt, so steigt der Widerstand. Dasselbe gilt, wenn das Haftmittel nicht ausreichend leitfähig ist. Außerdem können sich bei bipolaren Membranen der genannten Art unter den Betriebsbedingungen höchst unerwünschte Risse oder Blasen an den Kontaktstellen bilden.

Die bipolaren Membranen, die aus den beiden Einzelmembranen und Polyvinylalkohol als Haftmittel bestehen, stellt man nach den Angaben in Ber. der Bunsenges. f. physikalische Chemie 68. S. 536 (1964) her, indem man die Kationenaustauscherfolien und die Anionenaustauscherfolien mit einer Polyvinylalkohollösung bestreicht, die Folien aufeinanderlegt, eine Stunde auf 60 °C erwärmt und die bipolare Membran dann trocknet und 30 Minuten bei 110 °C zusammenpreßt. Die so erhaltenen bipolaren Membranen sind zwar fest verklebt, ihre Quellbarkeit in wäßrigen Salzlösungen ist jedoch irreversibel eingeschränkt, weshalb sich diese bipolaren Membranen, die Gleichrichtereigenschaften aufweisen, nicht für die Elektrodialyse eignen.

Es wurde nun gefunden, daß man für die Elektrodialyse geeignete bipolare Membranen aus einer Anionenaustauschermembran, einer Kationenaustauschermembran und einem ionendurchlässigen Haftmittel erhält, wenn man als Haftmittel eine wäßrige Lösung eines Polyvinylamins verwendet und die bipolare Membran, die aus den beiden Ionenaustauschermembranen und dem filmartigen Haftmittel besteht, einer Elektrodialyse unterwirft.

Zur Herstellung der bipolaren Membranen sind an sich übliche Ionenaustauschermembranen geeignet, wie sie z. B. in K. S. Spiegler : « Principles of Desalination », Acad. Press, New York, 1980. S. 269 beschrieben sind. Membranen dieser Art werden z. B. durch Copolymerisation von Styrol und Divinylbenzol oder Butadien oder von Acrylnitril und Butadien hergestellt, wobei die Kationen z. B. durch Sulfochlorierung und die Anionen durch Chlormethylierung und Umsetzung mit tertiären Aminen fest auf der Membran angebracht werden. Die Membranen haben z. B. eine Dicke von 0,1 bis 1 mm.

Als Haftmittel verwendet man eine wäßrige Polyvinylaminlösung. Geeignet ist z. B. ein Polyvinylamin, in dem die Aminogruppe durch Alkylgruppen mit 1 bis 4 C-Atomen substituiert sein kann, mit einem Molgewicht von $10^4$ bis $10^6$. Man setzt z. B. 0,5 bis 70 %ige, vorzugsweise 3 bis 15 %ige wäßrige Lösungen des Polyvinylamins ein. Lösungen der genannten Art werden z. B. nach an sich bekannten Verfahren durch saure oder alkalische Hydrolyse von Polyvinylformamid oder von Polyvinylacetamid mit Natronlauge oder Salzsäure erhalten. Besonders gut geeignet sind wäßrige Lösungen, die man durch eine salzsaure Hydrolyse von Polyvinylformamid, bei der man z. B. eine 1 bis 50 %ige, vorzugsweise 5 bis 20 %ige wäßrige Polyvinylformamid-Lösung bei Temperaturen von 60 bis 100 °C mit Salzsäure behandelt, erhält. Die Polyvinylaminlösungen sind noch flüssig und lassen sich gut auf die Membranen aufbringen.

Die Polyvinylaminlösung wird auf die Membranen, z. B. bei Temperaturen von 10 bis 50 °C aufgestrichen oder aufgewalzt, wobei eine ausreichende Haftung Z. B. schon dann erreicht wird, wenn das Haftmittel nur auf die eine der beiden Membranen aufgebracht wird. Mann kann die Membranen auch beidseitig mit der Lösung tränken. Die äußere Membranoberfläche wird bei der Fertigstellung der bipolaren Membran freigespült. Die Schichtdicke des Haftungsmittels beträgt z. B. 0,001 bis 0,05 mm.

Die auf diese Weise aus den beiden Ionenaustauschermembranen und dem filmartigen Haftmittel bestehende bipolare Membran erhält ihre

Festigkeit durch eine elektrodialytische Behandlung. Man führt die Elektrodialyse z. B. bei einer Stromstärke von 0,1 bis 10 A/$dm^2$, vorzugsweise bei 0,5 bis 5 A/$dm^2$ durch. Man elektrodialysiert z. B. 5 bis 50 h, vorzugsweise 10 bis 40 h bei Temperaturen von 10 bis 80 °C, vorzugsweise bei 20 bis 40 °C. Im einzelnen verfährt man dabei so, daß man das vorgefertigte Membranpaar so in die Elektrodialysezelle einbaut, daß die Kationenaustauschermembran zur Kathode, die Anionenaustauscher zur Anode schaut. Man kann z. B. eine Elektrodialysezelle verwenden, wie man sie bei dem späteren Einsatz der bipolaren Membran benötigt und wie sie beispielsweise durch die Figur 3 dargestellt ist. Man kann die Membranen aber auch in einer getrennten Anlage, wie zie z. B. in der Figur 1 dargestellt ist, der elektrodialytischen Nachbehandlung unterwerfen. Als Elektrolyten zur Behandlung der Membranen kann eine wäßrige Salzlösung mit einem Salzgehalt von 0,1 bis 5 Mol/l, vorzugsweise 0,5 bis 2 Mol/l, eingesetzt werden. Geeignete Salzlösungen sind z. B. Natriumchlorid-, Natriumacetat- oder Natriumhydroxid-Lösungen. Es können aber auch andere wasserlösliche Salze, Basen oder Säuren eingesetzt werden. Durch die Elektrodialyse wird bewirkt, daß die Membranen fest aufeinander verkleben. Sie können dann nicht mehr zerstörungsfrei voneinander getrennt werden.

Die nach dem neuen Verfahren erhältlichen bipolaren Membranen sind elastisch. Sie haben durch die Elektrodialyse eine Form angenommen, die die Einzelmembranen unter denselben Bedingungen angenommen hätten. Haufig sind die Membranen leicht gewellt ; Anionen und Kationenaustauschermembran haben sich in der Form einander angeglichen, ohne daß eine von beiden Risse zeigen würde. Die bipolaren Membranen sind ebensogut lagerfähig wie ihre Einzelkomponenten. Im allgemeinen werden sie in wäßriger Kochsalzlösung aufbewahrt.

Die erfindungsgemäßen bipolaren Membranen eignen sich besonders gut für elektrodialytische Verfahren. Es ist überraschend, daß die nach dem Verfahren der Erfindung miteinander verbundenen Membranen durch die elektrodialytische Nachbehandlung gleichmäßig und irreversibel miteinander verklebt werden. Außerdem konnte nicht erwartet werden, daß das auf diese Weise verfestigte Haftmittel den Strom- und Wassertransport innerhalb der Doppelmembran nicht behindert. Die bipolaren Membranen haben sich überraschenderweise auch nach längerem Gebrauch als elastisch und voll gebrauchsfähig erwiesen.

Die bipolaren Membranen sind wegen dieser vorteilhaften Eigenschaften z. B. gut geeignet, Salze in Säuren und Basen elektrodialytisch zurückzuspalten, wie es beispielsweise in J. Membrane Science, 2 (1977) 109 bis 124 beschrieben ist. Insbesondere eignen sie sich vorzüglich für die Überführung wäßriger Lösungen von Salzen organischer Verbindungen in wäßrige Lösungen der freien Basen oder Säuren, die den Salzen der organischen Verbindungen zugrundeliegen. Ausgangsstoffe für diese Elektrodialyse sind z. B. Salze von organischen Säuren, wie Carbonsäuren, Hydroxycarbonsäuren, Aminosäuren, Phenolen oder Salze von organischen Basen, wie Aminen, Heterocyclen, Aminosäuren sowie Betainen und quaternären Ammoniumverbindungen. Die Durchlässigkeit gegenüber den organischen Ionen dieser Art ist sehr gering, so daß die Elektrodialyse mit hohen Materialausbeuten und Selektivitäten erfolgt. Man erhält bei dieser Eletrodialyse z. B. 0,1 bis 10 molare wäßrige Lösungen der Basen oder Säuren.

Beispiel 1

a) Als Haftmittel wurde eine 5 gew.-%ige wäßrige Polyvinylaminlösung (K-Wert : 139) verwendet, die durch saure Hydrolyse von Polyvinylformamid mit Salzsäure (6 Studen bei 70 °C mit 1,22 Mol HCl je 1 kg Polyvinylformamid) erhalten wurde.

b) Das Haftmittel wurde auf fünf im Handel unter der Bezeichnung Neosepta® CH-45T erhältliche Kationenaustauschermembranen und fünf im Handel unter der Bezeichnung Neosepta® ACH-45T erhältlichen Anionenaustauschermembran jeweils einseitig dünn aufgewalzt. Die Membranen wurden mit der mit dem Haftmittel versehenen Seite aufeinandergelegt und glattgestrichen. Auf die gleiche Weise wurden 5 bipolare Membranen aus je 5 Kationenaustauschermembranen und Anionenaustauschermembranen, die im Handel unter den Bezeichnungen Selemion® CMV und Selemion® AMV erhältlich sind hergestellt.

c) Die nach Absatz b) erhaltenen vorgefertigten bipolaren Membranen wurden ohne weitere Behandlung in eine Elektrodialyse-Apparatur eingebaut, deren Schema aus der Figur 1 ersichtlich ist. Sie enthielt zwei Elektrolyträume (1) mit zwei Platinelektroden (2) und zwei im Handel unter der Bezeichnung Nafion® erhältlichen Kationenaustauschermenbranen (3). In den übrigen Räumen (4), die von den Elektrolyträumen (1) durch die Kationenaustauschermembranen (3) getrennt waren, wurden die 10 erfindungsgemäß hergestellten bipolaren Membranen (5) angebracht, die zwischen den Ionenaustauschermembranen (6 und 7) die Polyaminlösung enthielten. Die bipolaren Membranen zeigten mit der Anionenaustauschermembran (6) zur Anode und mit der Kationenaustauschermembran (7) zur Kathode. Die einzelnen bipolaren Membranen (5) waren durch PVC-Rahmen getrennt voneinander fest angeordnet. Rahmen und Membranen bildeten jeweils die Elektrolyträume, die Beströmung erfolgte durch Einlässe in den Rahmen. Alle inneren Räume (4) wurden mit der gleichen Lösung beströmt. Die Anlage hatte den Aufbau einer Elektrodialyseanlage, nur mit dem Unterschied, daß Diluat und Konzentrat identisch waren.

d) Durch die Elektrolyträume (1) wurden zur Bespülung der Elektroden (2) 1 500 Teile einer 5 %igen wäßrigen Natriumsulfatlösung geleitet. Zur Bespülung der zu verklebenden bipolaren Membranen (5) leitete man eine 5 %ige wäßrige

Natriumchloridlösung durch die Räume (4). Beide Lösungen wurden im Kreis gepumpt. Die Elektrodialyse wurde bei Raumtemperatur und bei einer Stromdichte von 0,75 $A/dm^2$ durchgeführt. Sie wurde nach 38 h abgebrochen. Nach dieser elektrodialytischen Behandlung waren die bipolaren Membranen fest miteinander verklebt. Sie waren elastisch und leicht gewellt.

e) Zwei nach Absatz b) erhaltenen Membranpaare wurden 38 h in 5 %iger waßriger Natriumchloridlösung gelagert, aber nicht der Elektrodialyse unterworfen. Nach dieser Behandlung ließen sich die Membranen leicht voneinander trennen. Eine Verklebung war nicht eingetreten.

Beispiel 2

Eine nach Beispiel 1, Absatz b) aus den Selemion® Membranen gefertigte bipolare Membran wurde in eine Elektrodialyse-Apparatur eingebaut, die schematisch durch Figur 2 dargestellt ist. Von der in Figur 1 beschriebenen Elektrodialyseapparatur unterschied sie sich dadurch, daß sie nur eine bipolare Membran (5) und zwei voneinander getrennte Räume (8 und 9) enthielt.

Die Elektrolyträume (1) wurden wie in Beispiel 1, Absatz (d) beschrieben mit 1 500 Teilen 5 %iger wäßriger Natriumsulfatlösung bespült. Sowohl der Raum (8) als auch der Raum (9) wurde voneinander getrennt mit 1 500 Teilen einer 10 %igen wäßrigen Natriumacetatlösung bespült.

Man elektrodialysierte 20 h bei Raumtemperatur und einer Stromdichte von 3 $A/dm^2$. Als Ergebnis wurden im Raum (9) 1 395 Teile einer wäßrigen Essigsäure (0,86 Mol/kg) entsprechend einer Stromausbeute von 54 % und im Raum (8) 1 694 Teile einer wäßrigen Lösung erhalten, die 0,60 Mol NaOH/kg (entsprechend einer Stromausbeute von 45 %) und 1,06 Mol Natriumacetat/kg enthielt.

Beispiel 3

Es wurde wie in Beispiel 2 beschrieben verfahren, wobei der Raum (9) mit 100 Teilen einer 1-molaren wäßrigen Lösung von Sarkosin-Natriumsalz und der Raum (8) mit 1 000 Teilen einer wäßrigen Lösung, die 0,5 Mol Natirumacetat und 0,5 Mol Essigsäure enthielt, beschickt wurde. Die Stromdichte war nach 12 h Versuchsdauer von 3 $A/dm^2$ auf 0,7 $A/dm^2$ abgesunken. Als Ergebnis wurden in raum (9) 900 Teile einer wäßrigen Sarkosin-Lösung (1,04 Mol/kg, entspricht einer Stromausbeute von 93 % und einer Materialausbeute von 95 %) und im Raum (8) 1 207 Teile einer wäßrigen Natriumacetat-Lösung (1,57 Mol/kg) erhalten.

Beispiel 4

Beispiel 2 wurde zu dem Zweck wiederholt, die Sperrwirkung der bipolaren Membranen gegenüber $Na^{\oplus}$ zu prüfen. Dauer des Versuchs : 11 h, Stromausbeute 95 %. Der Natriumgehalt in Raum (9) war von 2,30 % auf 0,02 % abgefallen und in Raum (8) von 2,30 % auf 3,70 % angestiegen. Die Membran hat demnach bis zu einem Konzentrationsunterschied um den Faktor > 150 eine Sperrwirkung von > 95 %.

Beispiel 5

Entsprechend Beispiel 2 wurde unter Verwendung der folgenden Lösungen elektrodialysiert : Raum (9) 1 000 Teile einer einmolaren wäßrigen Trinatriumnitrat-Lösung, Raum (8) 1 000 Teile 0,1 molare Natronlauge. Es wurde erhalten im Raum (9) 940 Teile einer wäßrigen Lösung von Citronensäure (1,0 Mol/kg, entspricht einer Materialausbeute von 94 % und einer Stromausbeute von 92 %) ; in Raum (8) 1 264 Teile Natronlauge, 1,72 Mol NaOH/kg, entspricht einer Materialausbeute von 69 %.

Die verwendete bipolare Membran war insgesamt etwa 100 h im Einsatz, wobei auf der Kationenaustauscherseite meist ein pH < 7 und auf der Anionenaustauscherseite ein pH > 12 geherrscht hat. Auch noch am Ende dieser Periode konnten die oben genannten Ausbeuten erzielt werden. Die Membran hatte sich zwar leicht dunkel gefärbt, zeigte aber sonst keine Veränderungen gegenüber ihrem Ausgangszustand.

Beispiel 6

In der im Beispiel 2 beschriebenen Apparatur wurden die aus der Figur 3 ersichtlichen Änderungen vorgenommen. Dabei wurde eine Kationenaustauschermembran (3) durch eine Anionenaustauschermembran « Neosepta® » ACH-45T (10) ersetzt. Die bipolare Membran (5) wurde aus einer Kationenaustauschermembran « Neosepta® » CH-45T und einer Anionenaustauschermembran « Neosepta® » ACH-45T wie im Beispiel 1, Absatz (b) beschrieben, hergestellt. Die Elektrolyträume (1) wurden mit 1 500 Teilen einer 5 %igen Natriumsulfat-Lösung bespült. Raum (9) wurde mit 1000 Teilen einer 1-molaren wäßrigen Lösung von γ-Aminobuttersäurehydrochlorid

$$(HCl \times H_2N{-}(CH_2)_3{-}COOH)$$

und Raum (8) mit 1 000 Teilen einer 5 %igen wäßrigen Natriumchlorid-Lösung beschickt. Man elektrodialysierte mit einer Anfangsstromstärke von 3 $A/dm^2$ 12 h bei Raumtemperatur.

Es wurden erhalten im Raum (9) eine wäßrige Lösung von γ-Aminobuttersäure (0,95 Mol/kg, entsprechend einer Materialausbeute von ca. 90 % und einer Stromausbeute von ca. 75 %). Der $Cl^{\ominus}$-Gehalt dieser Lösung war kleiner als 0,1 Mol/kg. Der Raum (8) enthielt Salzsäure mit einem HCl-Gehalt von 0,43 Mol/kg.

Beispiel 7

Man elektrodialysierte 20 h wie in Beispiel 6 beschrieben, wobei die folgenden Lösungen eingesetzt wurden : Raum (9) 1 000 Teile einer 1-molaren wäßrigen Tetrabutylammoniumhydrogensulfatlösung, Raum (8) 1 000 Teile einer 5 %igen wäßrigen Lösung von $Na_3PO_4 \times 12\ H_2O$.

Ergebnis : Raum (9) 994 Teile einer wäßrigen Lösung von Tetrabutylammoniumhydroxid (0,88 Mol/kg) und von Bistetrabutylammoniumsulfat (0,06 Mol/kg) entsprechend einer Materialausbeute in 88 % und einer Stomausbeute von 88 %. Nach 10 h bestand die Lösung im Raum (9) nahezu vollständig aus Bistetrabutylammoniumsulfat.

Beispiel 8

Man elektrodialysierte 20 h wie in Beispiel 6 beschrieben, wobei die folgenden Lösungen eingesetzt wurden. Raum (9) 1 000 Teile einer 1-molaren wäßrigen Lösung von Triethylammoniumacetat ; Raum (8) 1 000 Teile einer 5 %igen wäßrigen Natriumacetatlösung.

Ergebnis : Raum (9) 807 Teile eines 2-Phasengemisches aus Triethylamin und Wasser. Die Gesamtmenge an Triethylamin betrug ca. 1,1 Mol/kg (Materialausbeute 89 %, Stromausbeute : 62 %). Raum (8) 1 196 Teile einer wäßrigen Essigsäure : 0,70 Mol/kg (Materialausbeute : 84 %).

Die bipolare Membran wurde insgesamt 50 h getestet. Nach ihrem Ausbau zeigte sich, daß sie gleichmäßig und innig verklebt war. Wurd sie hingegen nach ihrer Vorfertigung (ohne Elektrodialyse) in 5 %iger NaCl gelagert, so hatte eine Verklebung der Membranen nicht stattgefunden.

Beispiel 9

Wie in Beispiel 1, Absätze (a) und (b) beschrieben, wurde eine bipolare Membran unter Verwendung der im Handel (Firma Ionics) als Type 61 CZL 386 bezeichnete Kationenaustauschermembran und der als Type 103 QZL 386 bezeichneten Anionenaustauschermembran hergestellt.

Die auf diese Weise vorgefertigte bipolare Membran wurde entsprechend Beispiel 2 (Apparatur siehe Figur 2) für, die Elektrodialyse verwendet. Man elektrodialysierte 10 h bei Raumtemperatur und einer Stromdichte von 2,9 $A/cm^2$. Dabei wurden die folgenden Lösungen eingesetzt : Raum (9) 200 Teile einer wäßrigen 0,25 molaren Lösung von Dinatriumnaphthalindisulfonat-1,5. Raum (8) 100 Teile 0,5 %ige Natronlauge. Es wurden erhalten im Raum (9) 1 937 Teile 0,24 molare Lösung von Naphthalin-1,5-disulfonsäuremononatriumsalz (0,02 Mol/kg Dinatriumsalz, Stromausbeute : 50 %) und im Raum (8) ca. 1 000 Teile 2,2 %ige Natronlauge.

Nach Beendigung des Versuchs wurden die Membranen untersucht. Es hatte sich eine glatte, blasenfreie, gutverklebte bipolare Membran gebildet, die sich nicht mehr in ihre Einzelkomponenten zerlegen ließ.

**Patentansprüche**

1. Verfahren zur Herstellung einer bipolaren Membran durch Befestigung einer Anionenaustauschermembran auf einer Kationenaustauschermembran mit Hilfe eines ionendurchlässigen Haftmittels, dadurch gekennzeichnet, daß man als Haftmittel eine wäßrige Lösung eines Polyvinylamins verwendet und die bipolare Membran, die aus den beiden Ionenaustauschermembranen und dem filmartigen Haftmittel besteht, einer Elektrodialyse unterwirft.

2. Verfahren nach Anspruch 1, dadurch gekennzeichnet, daß man als Haftmittel eine 0,5 bis 70 gewichtsprozentige wäßrige Polyvinylamin-Lösung verwendet.

3. Verfahren nach Anspruch 1 dadurch gekennzeichnet, daß man als Haftmittel eine wäßrige Polyvinylamin-Lösung verwendet, die durch Hydrolyse einer 1 bis 50 %igen wäßrigen Polyvinylformamid-Lösung bei Temperaturen von 60 bis 100 °C mit Salzäure erhalten wurde.

4. Verfahren nach Anspruch 1, dadurch gekennzeichnet, daß man bei der Elektrodialyse die vorgefertigte bipolare Membran so anordnet, daß die Anionenaustauschermembran der Anode und die Kationenaustauschermembran der Kathode zugewandt ist.

5. Verfahren nach Anspruch 1, dadurch gekennzeichnet, daß man die Elektrodialyse bei einer Stromstärke von 0,1 bis 10 $A/dm^2$ und bei Temperaturen von 10 bis 80 °C durchführt.

6. Verwendung der nach den Ansprüchen 1 bis 5 erhaltenen bipolaren Membranen für die Elektrodialyse.

7. Verwendung nach Anspruch 6 für die Überführung wäßriger Lösungen von Salzen organischer Verbindungen in wäßrige Lösungen der freien Basen oder Säuren, die den Salzen der organischen Verbindungen zugrundeliegen.

8. Verwendung nach Anspruch 7 für die Herstellung von 0,1 bis 10 molaren wäßrigen Lösungen der Basen oder Säuren.

**Claims**

1. A process for the production of a bipolar membrane by fastening an anion exchange membrane to a cation exchange membrane with the aid of an ion-permeable adhesive, wherein an aqueous solution of a polyvinylamine is used as the adhesive, and the bipolar membrane, which consists of the two ion exchange membranes and the film-like adhesive, is subjected to electrodialysis.

2. A process as claimed in claim 1, wherein a 0.5-70 % strength by weight aqueous polyvinylamine solution is used as the adhesive.

3. A process as claimed in claim 1, wherein the adhesive used is an aqueous polyvinylamine solution obtained by hydrolyzing a 1-50 % strength aqueous polyvinylformamide solution with hydrochloric acid at from 60 to 100 °C.

4. A process as claimed in claim 1, wherein, in the electrodialysis, the preprepared bipolar membrane is arranged so that the anion exchange membrane faces the anode, and the cation exchange membrane faces the cathode.

5. A process as claimed in claim 1, wherein electrodialysis is carried out at a current density of from 0.1 to 10 A/dm$^2$ and at from 10 to 80 °C.

6. Use of a bipolar membrane obtained as claimed in any of claims 1 to 5 for electrodialysis.

7. Use as claimed in claim 6 for converting aqueous solutions of salts of organic compounds to aqueous solutions of the bases or acids from which the salts of the organic compounds are derived.

8. Use as claimed in claim 7 for the preparation of from 0.1- to 10-molar aqueous solutions of the bases or acids.

**Revendications**

1. Procédé de préparation d'une membrane bipolaire par fixation d'une membrane échangeuse d'anions sur une membrane échangeuse de cations à l'aide d'un milieu adhésif perméable aux ions, caractérisé en ce qu'on utilise comme milieu adhésif une solution aqueuse d'une polyvinylamine et on soumet à une électrodialyse la membrane bipolaire qui est constituée par les deux membranes échangeuses d'ions et le milieu adhésif filmogène.

2. Procédé selon la revendication 1, caractérisé en ce que l'on utilise comme milieu adhésif une solution aqueuse à 0,5-70 % en poids de polyvinylamine.

3. Procédé selon la revendication 1, caractérisé en ce qu'on utilise comme milieu adhésif une solution aqueuse de polyvinylamine qui a été obtenue par hydrolyse par l'acide chlorhydrique d'une solution aqueuse à 1-50 % de polyvinylformamide à une température de 60 à 100 °C.

4. Procédé selon la revendication 1, caractérisé en ce que l'on dispose pendant l'électrodialyse la membrane bipolaire préalablement préparée, de telle sorte que la membrane échangeuse d'anions est du côté de l'anode et la membrane échangeuse de cations est du côté de la cathode.

5. Procédé selon la revendication 1, caractérisé en ce que l'on effectue l'électrodialyse à une intensité de courant de 0,1 à 10 A/dm$^2$ et à une température de 10 à 80 °C.

6. Utilisation de membranes bipolaire obtenues selon l'une quelconque des revendications 1 à 5 pour l'électrodialyse.

7. Utilisation selon la revendication 6, pour la transformation de solutions aqueuses de sels de composés organiques en solutions aqueuses des bases ou des acides libres qui sont à l'origine des sels de composés organiques.

8. Utilisation selon la revendication 7, pour la préparation de solutions aqueuses de 0,1 à 10 fois molaires de bases ou d'acides.

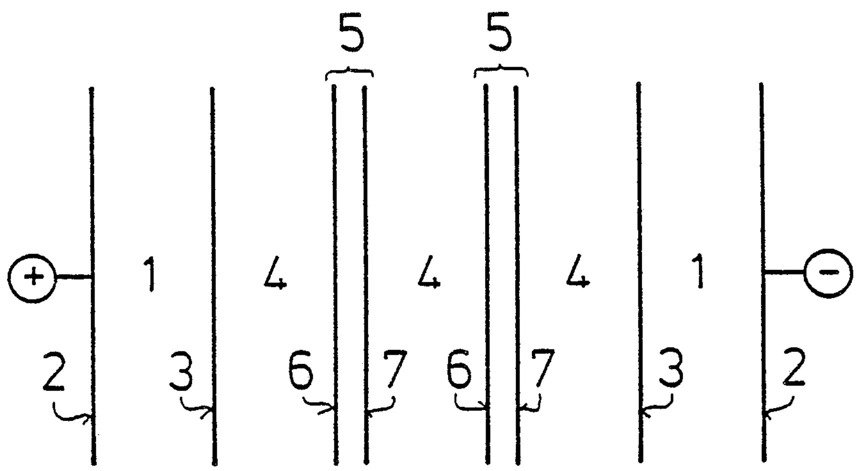

FIG.1

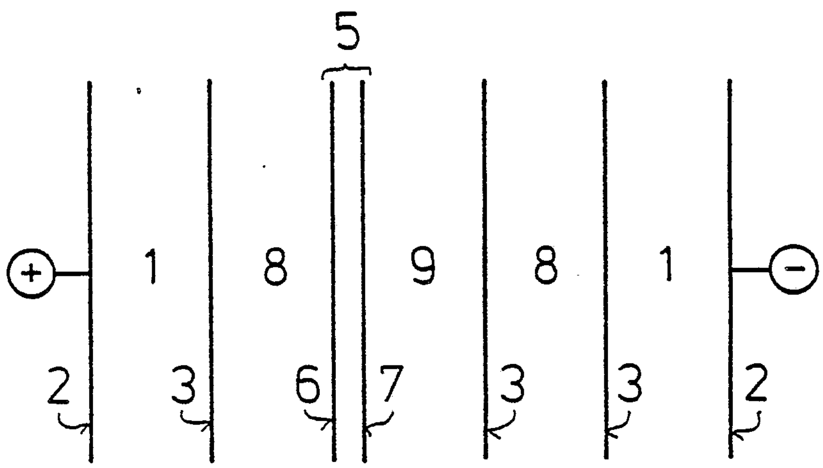

FIG.2

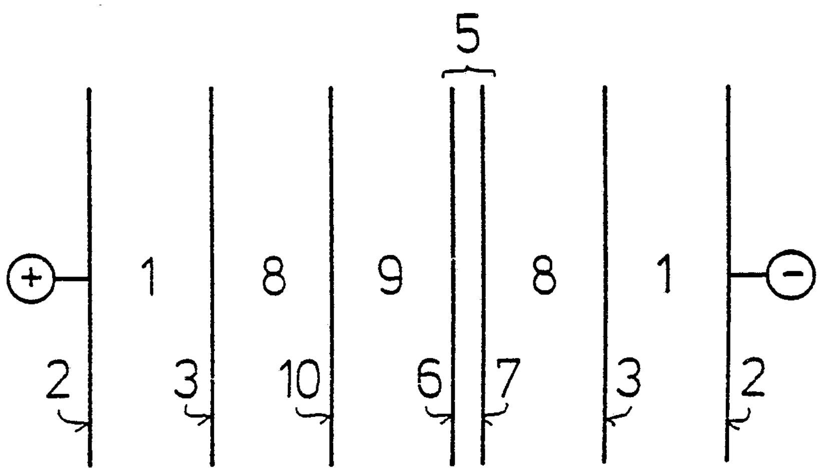

FIG.3